# EUROPEAN PATENT APPLICATION

(11) **EP 4 506 109 A1**
(43) Date of publication of application: **12.02.2025**
(21) Application number: 23854982.8
(22) Date of filing: 24.05.2023
(51) Int. Cl.: B25J 9/00, B25J 9/16, B25J 13/00, B25J 13/08, B25J 19/06

(54) **ELECTRONIC DEVICE FOR PERFORMING SAFETY FUNCTION AND CONTROL METHOD THEREFOR**

(30) Priority: 17.08.2022 KR 20220102810
(71) Applicant: Samsung Electronics Co., Ltd., Suwon-si, Gyeonggi-do 16677 (KR)
(72) Inventor: CHOI, Hyunmi, Suwon-si Gyeonggi-do 16677 (KR); KIM, Woomok, Suwon-si Gyeonggi-do 16677 (KR); KIM, Jooyoung, Suwon-si Gyeonggi-do 16677 (KR); HWANG, Sangyoung, Suwon-si Gyeonggi-do 16677 (KR); SONG, Dongshin, Suwon-si Gyeonggi-do 16677 (KR)
(74) Representative: Gulde & Partner
(86) International application number: PCT/KR2023/007069
(87) International publication number: WO 2024/039009

(57) **Abstract**

An electronic apparatus includes a communication interface and at least one processor configured to obtain safety template information. The at least one processor may, based on sensing data being received from a user device, identify the type of the context information corresponding to the at least one sensing data, identify the information about the dangerous situations based on the safety template information and the type of the context information, identify whether a surrounding environment of a wearable robot corresponds to a dangerous situation based on the at least one sensing data; based on identifying that the surrounding environment of the wearable robot corresponds to the dangerous situation, obtain the control information mapped to each dangerous situation based on the safety template information, and control at least one of the wearable robot or the at least one user device based on the obtained control information.

## Description

### [Technical Field]

1. This disclosure relates to an electronic apparatus that performs a safety function and a controlling method thereof, and more particularly, to an electronic apparatus that performs a safety function using a sensor included in a user device, and a controlling method thereof.

### [Background Art]

2. Recently, technology has been developed for electronic devices that provide services to users. In particular, technology development for electronic devices, such as wearable robots (e.g., Gait Enhancing and Motivation System (GEMS)), that helps users to walk efficiently and stably by enhancing their gait and motor functions is being actively developed.

3. In a case of a wearable robot such as GEMS, it is often directly coupled to the user's body, and a safety function must be secured in order for the user wearing the robot to use the robot safely. In particular, the user's safety must be secured by predicting dangerous situations that may occur in the user's surroundings such as a space where the user walks, or by quickly reacting to the dangerous situations.

### [Disclosure]

### [Technical Solution]

4. According to an aspect of the disclosure, an electronic apparatus includes: a communication interface; and at least one processor configured to: obtain safety template information including a plurality of types of context information, information about dangerous situations mapped to a type of the plurality of types of context information, and control information mapped to each dangerous situation among the dangerous situations; based on at least one sensing data being received from at least one user device through the communication interface, identify the type of the context information corresponding to the at least one sensing data; identify the information about the dangerous situations based on the safety template information and the type of the context information; identify whether a surrounding environment of a wearable robot corresponds to a dangerous situation based on the at least one sensing data; based on identifying that the surrounding environment of the wearable robot corresponds to the dangerous situation, obtain the control information mapped to each dangerous situation based on the safety template information; and control at least one of the wearable robot or the at least one user device based on the obtained control information.

5. The at least one processor may be further configured to: based on identifying first context information and second context information based on the at least one sensing data received from the at least one user device, identify first dangerous situation information and second dangerous situation information corresponding to the type of the first context information and the type of the second context information; identify whether the surrounding environment of the wearable robot corresponds to a first dangerous situation based on the at least one sensing data corresponding to the first context information; identify whether the surrounding environment of the wearable robot corresponds to a second dangerous situation based on the at least one sensing data corresponding to the second context information; based on identifying the first dangerous situation and the second dangerous situation, obtain first control information mapped to the first dangerous situation and second control information mapped to the second dangerous situation based on the safety template information.

6. The electronic apparatus may further include the wearable robot, wherein the wearable robot may further include a driver, and wherein the at least one processor may be further configured to: based on identifying that a same type of context information is obtained based on at least two sensing data received from the at least one user device, identify dangerous situation information based on the identified same type of context information; based on identifying that the surrounding environment of the wearable robot corresponds to the dangerous situation corresponding to the dangerous situation information based on the at least two sensing data, obtain a control signal mapped to the dangerous situation based on the safety template information; and control the driver based on the control signal.

7. The at least two sensing data may include first sensing data and second sensing data, and wherein the at least one processor may be further configured to, based on identifying the dangerous situation based on the first sensing data and identifying the dangerous situation based on the second sensing data, obtain the control signal mapped to the dangerous situation based on the safety template information.

8. The at least one processor may be further configured to: based on the at least one sensing data corresponding to the type of context information received from the at least one user device being less than a predetermined number, obtain notification information mapped to the dangerous situation based on the safety template information; and transmit the obtained notification information to the at least one user device through the communication interface.

9. The at least one processor may be further configured to: based on identifying dangerous situation information, identify whether the surrounding environment of the wearable robot corresponds to the dangerous situation by providing the at least one sensing data and the dangerous situation information to a trained artificial intelligence model.

10. The plurality of types of context information may include at least one of surrounding object recognition information, surrounding terrain recognition information, altitude recognition information, temperature/humidity recognition information, time zone recognition information, or hyper-exercise recognition information, wherein dangerous situation information may include at least one of collision avoidance situation information, unavailability situation information, use caution situation information, use restriction situation information, or malfunction situation information, and wherein the control information may include at least one of sound notification information, exercise intensity information of the wearable robot, power control information, ambient sound listening control information, or flash control information.

11. The electronic apparatus may further include a server, and wherein the server may transmit a control signal to at least one of the wearable robot or the at least one user device through the communication interface based on the obtained control information.

12. The at least one processor may be further configured to, based on identifying dangerous situation information, identify whether the surrounding environment of the wearable robot corresponds to the dangerous situation by providing the at least one sensing data and the dangerous situation information to a trained artificial intelligence model.

13. The at least one user device may include at least one of a smartphone, a smart watch or a Bluetooth earphone.

14. According to an aspect of the disclosure, a controlling method of an electronic apparatus includes: obtaining safety template information including a plurality of types of context information, information about dangerous situations mapped to a type of the plurality of types of context information, and control information mapped to each dangerous situation among the dangerous situations; based on at least one sensing data being received from at least one user device through a communication interface, identifying the type of the context information corresponding to the at least one sensing data; identifying the information about the dangerous situations based on the safety template information and the type of the context information; identifying whether a surrounding environment of a wearable robot corresponds to a dangerous situation based on the at least one sensing data; based on identifying that the surrounding environment of the wearable robot corresponds to the dangerous situation, obtaining the control information mapped to each dangerous situation based on the safety template information; and controlling at least one of the wearable robot or the at least one user device based on the obtained control information.

15. The method may further include, based on identifying first context information and second context information based on the at least one sensing data received from the at least one user device, identifying first dangerous situation information and second dangerous situation information corresponding to the type of the first context information and the type of the second context information, and wherein the identifying whether the surrounding environment of the wearable robot corresponds to the dangerous situation may include: identifying whether the surrounding environment of the wearable robot corresponds to a first dangerous situation based on the at least one sensing data corresponding to the first context information; and identifying whether the surrounding environment of the wearable robot corresponds to a second dangerous situation based on the at least one sensing data corresponding to the second context information, and wherein the obtaining control information may include, based on identifying the first dangerous situation and the second dangerous situation, obtaining first control information mapped to the first dangerous situation and second control information mapped to the second dangerous situation based on the safety template information.

16. The method may further include, based on identifying that a same type of context information is obtained based on at least two sensing data received from the at least one user device, identify dangerous situation information based on the identified same type of context information, and wherein the obtaining control information may include, based on identifying that the surrounding environment of the wearable robot corresponds to the dangerous situation corresponding to the dangerous situation information based on the at least two sensing data, obtaining a control signal mapped to the dangerous situation based on the safety template information, and wherein the controlling may include controlling a driver based on the control signal. 1

17. The at least two sensing data may include first sensing data and second sensing data, and wherein the obtaining the control signal further may include, based on identifying the dangerous situation based on the first sensing data and identifying the dangerous situation based on the second sensing data, obtaining the control signal mapped to the dangerous situation based on the safety template information.

18. The obtaining control information may include, based on the at least one sensing data corresponding to the type of context information received from the at least one user device being less than a predetermined number, obtaining notification information mapped to the dangerous situation based on the safety template information, and wherein the controlling may include transmitting the obtained notification information to the at least one user device.

19. According to an aspect of the disclosure, an electronic apparatus includes: at least one memory configured to store instructions; at least one processor configured to execute the instructions to: obtain safety template information including a plurality of types of context information, information about situations mapped to a type of the plurality of types of context information, and control information mapped to each situation among the situations; based on at least one sensing data being received from at least one user device, identify the type of the context information corresponding to the at least one sensing data; based on identifying that a surrounding environment of a wearable robot corresponds to a situation based on the at least one sensing data, obtain control information mapped to each situation based on the safety template information; and control at least one of the wearable robot or the at least one user device based on the obtained control information.

20. The at least one processor may be further configured to: based on identifying that a same type of context information is obtained based on at least two sensing data received from the at least one user device, identify situation information based on the identified same type of context information.

21. The at least two sensing data may include first sensing data and second sensing data, and wherein the at least one processor may be further configured to, based on identifying the situation based on the first sensing data and identifying the situation based on the second sensing data, obtain a control signal mapped to the situation based on the safety template information.

22. The at least one processor may be further configured to: based on the at least one sensing data corresponding to the type of context information received from the at least one user device being less than a predetermined number, obtain notification information mapped to the situation based on the safety template information; and transmit the obtained notification information to the at least one user device.

23. The at least one processor may be further configured to: based on identifying situation information, identify whether the surrounding environment of the wearable robot corresponds to the situation by providing the at least one sensing data and the situation information to a trained artificial intelligence model.

24. According to an aspect of the disclosure, in a non-transitory computer-readable recording medium that stores computer instructions for an electronic apparatus to perform operations when being executed by a processor of the electronic apparatus, the operations may include obtaining safety template information including a plurality of types of context information, information about dangerous situations mapped to a type of the plurality of types of context information, and control information mapped to each dangerous situation among the dangerous situations; based on at least one sensing data being received from at least one user device through a communication interface, identifying the type of the context information corresponding to the at least one sensing data; identifying the information about the dangerous situations based on the safety template information and the type of the context information; identifying whether a surrounding environment of a wearable robot corresponds to a dangerous situation based on the at least one sensing data; based on identifying that the surrounding environment of the wearable robot corresponds to the dangerous situation, obtaining the control information mapped to each dangerous situation based on the safety template information; and controlling at least one of the wearable robot or the at least one user device based on the obtained control information.

### [Description of Drawings]

25. The above and/or other aspects, features, and advantages of embodiments of the present disclosure will be more apparent from the following description with reference to the accompanying drawings, in which:
FIGS. 1A and 1B are views illustrating a controlling method of an electronic apparatus, according to one or more embodiments;
FIG. 2 is a block diagram illustrating a configuration of an electronic apparatus, according to one or more embodiments;
FIG. 3 is a flowchart illustrating a controlling method of an electronic apparatus, according to one or more embodiments;
FIGS. 4A and 4B are views illustrating sensing data and safety template information, according to one or more embodiments;
FIG. 5 is a view illustrating a controlling method of an electronic apparatus when a plurality of sensing data is received, according to one or more embodiments;
FIG. 6 is a view illustrating a method of transmitting different types of control signals, according to one or more embodiments;
FIGS. 7A and 7B are views illustrating a method of identifying a dangerous situation using a trained artificial intelligence model, according to one or more embodiments;
FIG. 8 is a view illustrating a controlling method of an electronic apparatus, according to one or more embodiments;
FIG. 9 is a view illustrating a controlling method of an electronic apparatus, according to one or more embodiments; and
FIG. 10 is a block diagram illustrating detailed configuration of an electronic apparatus, according to one or more embodiments.

### [Mode for Invention]

36. Hereinafter, example embodiments of the present disclosure will be described with reference to the accompanying drawings.

37. The terms used in the present disclosure will be described briefly, and the present disclosure will be described in detail.

38. The terms used in the example embodiments of the disclosure are general terms which are widely used now and selected considering the functions of the disclosure. However, the terms may vary depending on the intention of a person skilled in the art, a precedent, or the advent of new technology. In addition, in a specified case, the term may be arbitrarily selected. In this case, the meaning of the term will be explained in the corresponding description. Therefore, terms used in the disclosure may be defined based on a meaning of the terms and contents described in the disclosure, not simply based on names of the terms.

39. As used herein, the expression "have", "may have", "include", or "may include" refers to the existence of a corresponding feature (e.g., numeral, function, operation, or constituent element such as component), and does not exclude one or more additional features.

40. The expression of "at least one of A or B" is to be understood as indicating only A, only B, or both A and B.

41. The expression "a first", "a second", "the first", or "the second" used in various example embodiments of the disclosure may modify various components regardless of their order and/or the importance but does not limit the corresponding components.

42. When it is mentioned that any component (for example, a first component) is (operatively or communicatively) coupled to or is connected to another component (for example, a second component), it is to be understood that any component is directly coupled to another component or may be coupled to another component through the other component (for example, a third component).

43. A singular expression includes a plural expression as long as they are clearly distinguished in the context. In the application, it should be understood that the terms such as "comprising", "including" are intended to express that features, numbers, steps, operations, constituent elements, part, or combinations thereof described in the specification are present and do not exclude existence or additions of one or more other features, numbers, steps, operations, constituent elements, part, or combinations thereof.

44. In the disclosure, the term "module" or "unit" performs at least one function or operation, and may be embodied as hardware, software, or a combination thereof. A plurality of "modules" or a plurality of "units" may be integrated into at least one module to form at least one processor, except a "module" or "unit" which needs be embodied as particular hardware.

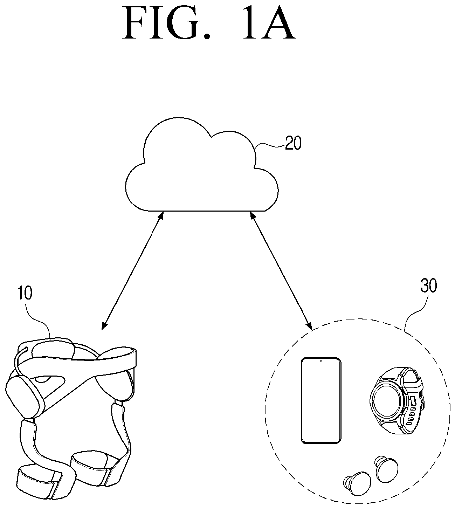

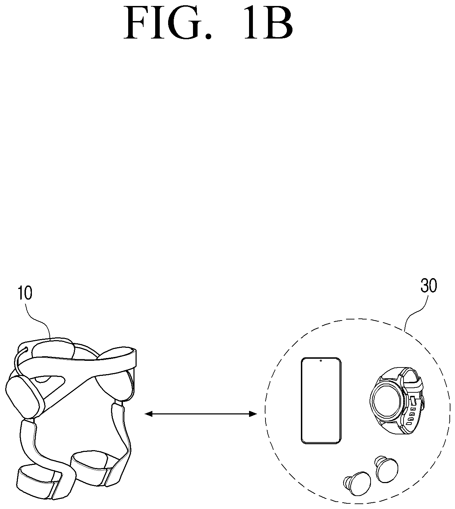

45. FIGS. 1A and 1B are views provided to schematically explain a controlling method of an electronic apparatus according to one or more embodiments.

46. Referring to FIGS. 1A and 1B, an electronic apparatus 100 may receive sensing data from at least one user device 30, and identify whether a surrounding environment of a robot 10 corresponds to a dangerous situation using the received sensing data. The user device 30 is a user device currently worn by a user and for example, it may include at least one of a smartphone, a smart watch or a Bluetooth earphone, but is not limited thereto. The at least one user device 30 may include various types of devices capable of performing communication with the electronic apparatus 100.

47. Here, as illustrated in FIG. 1A, the electronic apparatus 100 may be implemented as a server 20, and the robot 10 may be, for example, a wearable robot. According to one or more embodiments, the server 20 may receive sensing data obtained from a sensor included in each of the at least one user device 30, for example, image data obtained through a camera. According to one or more embodiments, when receiving image data from the at least one device 30, the server 20 may analyze the image data to identify whether a surrounding environment of the robot corresponds to a dangerous situation. For example, the server 20 may analyze the received image data to identify that there is an obstacle in front of the robot 10.

48. According to one or more embodiments, when it is identified that the robot 10 is in a dangerous situation, the electronic apparatus 100 may perform an operation corresponding to the dangerous situation by controlling the robot 10 or the at least one user device 30. For example, when it is identified that an obstacle exists in front of the robot 10, the server 20 may transmit a control signal for turning off the power of the robot 10 to the robot 10, or transmit a control signal for outputting a warning sound to the user device 30.

49. However, an electronic apparatus may be implemented as the robot 10 as illustrated in FIG. 1B. According to one or more embodiments, when receiving image data from the at least one device 30, the robot may analyze the image data to identify whether an surrounding environment of the robot 10 corresponds to a dangerous situation. For example, the robot 10 may analyze the received image data to identify that an obstacle exists in front of the robot 10. According to one or more embodiments, when it is identified that an obstacle exists in front of the robot 10, the robot 10 may control a driving unit including the robot 10 to stop the operation of the robot 10. Alternatively, the robot 10 may transmit a control signal for outputting a warning sound to the user device 30.

50. Hereinafter, various embodiments in which a surrounding environment of a wearable robot is monitored using sensing information obtained from a user device and a safety function is performed based thereon will be described.

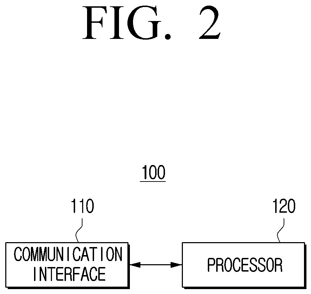

51. FIG. 2 is a block diagram illustrating configuration of an electronic apparatus according to one or more embodiments.

52. According to FIG. 2, the electronic apparatus 100 may include a communication interface 110 and a processor 120.

53. The electronic apparatus 100 may be one of the robot 10 or the server 20. According to one or more embodiments, the robot 10 may be a wearable robot such as a Gait Enhancing and Motivating System (GEMS). GEMS is a wearable walking assistance robot that helps users walk stably by assisting walking and motor functions based on robotics technology. GEMS is worn on the hip, knee, ankle, etc. according to the user's needs to relieve the load on the main muscles involved in walking. However, it is not limited thereto, and the robot 10 may be any one of an auxiliary robot, a recycling robot and an augmenting robot. When the electronic apparatus 100 is implemented as the robot, the electronic apparatus 100 may perform communication with the at least one user device 30 as illustrated in FIG. 1B.

54. The electronic apparatus 100 may be implemented as the server, that is, various types of devices capable of providing content, such as a content providing server, a PC, etc. Alternatively, the electronic apparatus 100 may be a system itself in which a clouding computing environment is established. When the electronic apparatus 100 is implemented as the server 20, the electronic apparatus 100 may perform communication regarding each of the robot 10 and the at least one user device 30 as illustrated in FIG. 1A.

55. The communication interface 110 receives various types of contents. For example, the communication interface 110 may receive signals from an external device (e.g., source device), an external storage medium (e.g., universal serial bus (USB) memory), an external server (e.g., web hard) or the like through a communication method such as an access point (AP)-based wireless fidelity (Wi-Fi, i.e. wireless local area network (LAN)), a Bluetooth, a Zigbee, a wired/wireless local area network (LAN), a wide area network (WAN), Ethernet, an IEEE 1394, a high definition multimedia interface (HDMI), a USB, a mobile high-definition link (MHL), an audio engineering society/European broadcasting union (AES/EBU) communication, an optical communication or a coaxial communication by using a streaming or a downloading method.

56. According to one or more embodiments, the processor 120 may obtain sensing data from at least one device through the communication interface 110.

57. The one or more processors 120 (hereinafter, the processor) may be electrically connected to the communication interface 110 to control the overall operations of the electronic apparatus 100. The processor 120 may consist of one or multiple processors. Specifically, the processor 120 may perform the operations of the electronic apparatus 100 according to various embodiments by executing at least one instruction stored in a memory.

58. According to one or more embodiments, the processor 120 may be implemented by a digital signal processor (DSP) processing a digital video signal, a microprocessor, a graphics processing unit (GPU), an artificial intelligence (AI) processor, a neural processing unit (NPU), or a time controller (TCON). However, the processor 120 is not limited thereto, and may include one or more of a central processing unit (CPU), a micro controller unit (MCU), a micro processing unit (MPU), a controller, an application processor (AP), a communication processor (CP), and an ARM processor, or may be defined by these terms. In addition, the processor 120 may be implemented by a system-on-chip (SoC) or a large scale integration (LSI) in which a processing algorithm is embedded or may be implemented in the form of an application specific integrated circuit (ASIC) or a field programmable gate array (FPGA).

59. According to one or more embodiments, the processor 120 may monitor the performance (or capability) of at least one hardware included in the electronic apparatus 100 to identify whether the performance of the at least one hardware is equal to or less than a predetermined value. When it is determined that the performance of the at least one hardware included in the electronic apparatus 100 is equal to or less than a predetermined value, the processor 120 may identify a specific service performed through the identified hardware. Subsequently, the processor 120 may identify that the electronic apparatus 100 can no longer perform the identified specific service.

60. According to one or more embodiments, the processor 120 may obtain safety template information including control information corresponding to a dangerous situation. Here, the safety template information is information to which control information corresponding to the type of the identified dangerous situation is mapped. According to one or more embodiments, the processor 120 may obtain safety template information including a plurality of different types of context information stored in the memory, information on dangerous situations mapped to each of the plurality of context information and control information mapped to each of the dangerous situations.

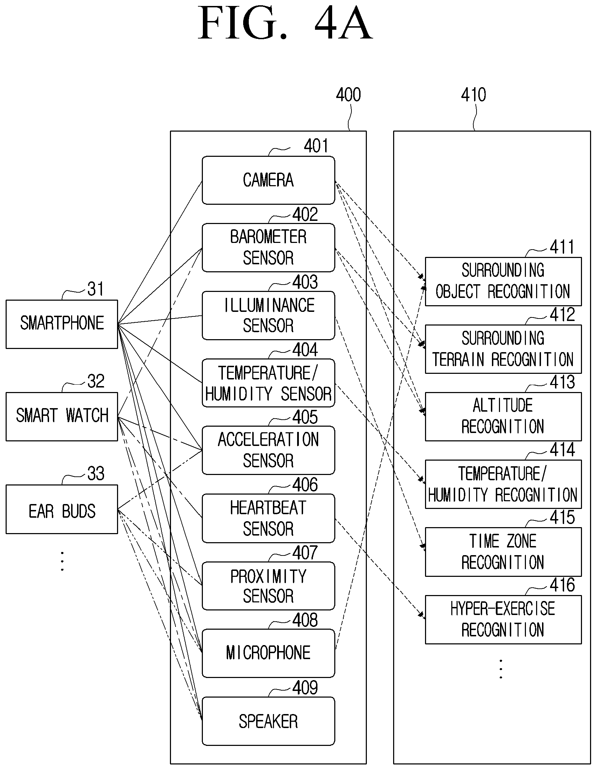

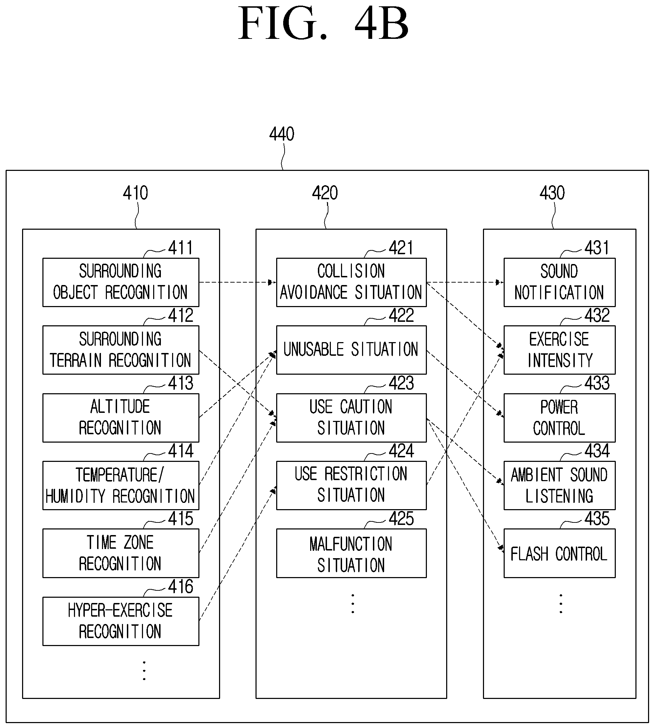

61. Here, the context information may be information regarding a surrounding environment of the robot such as surrounding object recognition information or current ambient temperature information. The dangerous situation information is information regarding the danger level or situation type of the surrounding environment of the robot 10 and may be, for example, information regarding collision avoidance situation of the robot 10 or situation information where the robot 10 cannot be used. The control information is feedback information regarding the identified dangerous situation and may be, for example, a control signal corresponding to turning-off the power of the robot 10 or a control signal corresponding to flash-on of the user device 30. The safety template information will be described in detail with reference to FIGS. 4A and 4B. According to one or more embodiments, the safety template information may be pre-stored in the memory.

62. According to one or more embodiments, the processor 120 may identify context information based on sensing data. For example, when receiving at least one sensing data from at least one user device through the communication interface 110, the processor 120 may identify context information corresponding to the received at least one sensing data. Here, the sensing data may be data obtained through at least one sensor included in the at least one user device 30, and may be image information obtained through a camera included in a smartphone that is one of the user devices. The sensing data will be described in detail with reference to FIG. 4A.

63. In this case, according to one or more embodiments, context information corresponding to sensing data may be identified based on a type of a sensor used to obtain the sensing data. For example, context information corresponding to sensor type information may be stored in a memory, and the processor 120 may identify sensor type information of the received sensing data, and identify context information corresponding thereto. For example, when image information is obtained through a camera included in a user device, the processor 120 may identify that the type of sensor is a camera, and identify at least one of surrounding object recognition information, surrounding terrain recognition information or altitude recognition information as corresponding context information.

64. According to one or more embodiments, the processor 120 may identify dangerous situation information. According to one or more embodiments, the processor 120 may identify dangerous situation information based on safety template information and identified type of context information. For example, when the identified type of context information is surrounding object recognition information, the processor 120 may identify collision avoidance situation information corresponding to the surrounding object recognition information as dangerous situation information based on obtained safety template information.

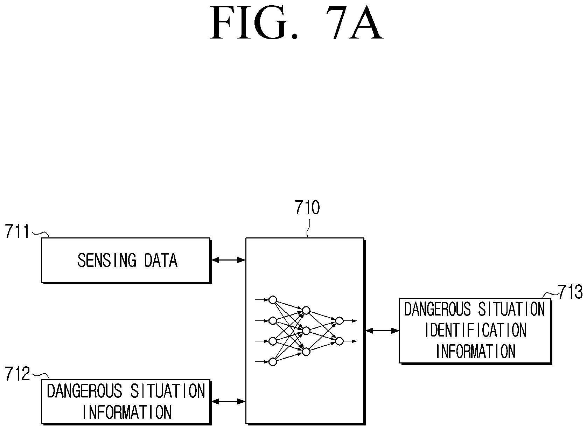

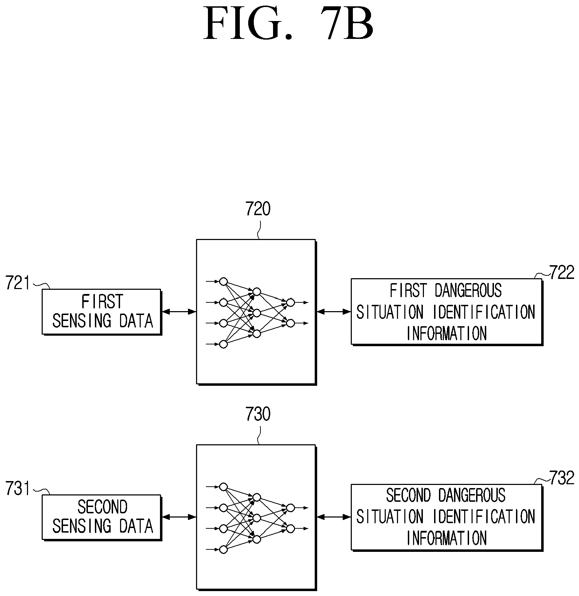

65. According to one or more embodiments, the processor 120 may identify whether a surrounding environment of a wearable robot corresponds to a dangerous situation. According to one or more embodiments, the processor 120 may identify whether a surrounding environment of a wearable robot corresponds to a dangerous situation corresponding to the identified dangerous situation based on received at least one sensing data and the identified dangerous situation information. For example, when image information on the front of a user wearing the robot 10 is received as sensing data and collision avoidance situation information corresponding thereto is obtained, the processor 120 may identify whether a surrounding environment of the robot 10 is currently in a collision avoidance situation using a trained artificial intelligence model. This will be described in detail with reference to FIGS. 7A and 7B.

66. Then, according to one or more embodiments, the processor 120 may obtain control information mapped to the identified dangerous situation. According to one or more embodiments, when it is identified that a surrounding environment of the wearable robot corresponds to a dangerous situation, the processor 120 may obtain at least one control information mapped to the identified dangerous situation based on a safety template. For example, when it is identified that a surrounding environment of the wearable robot corresponds to a collision avoidance situation, the processor 120 may obtain at least one of sound notification information or exercise intensity information mapped to the collision avoidance situation based on the safety template.

67. Subsequently, according to one or more embodiments, the processor 120 may control at least one of the wearable robot or the user device based on the obtained at least one control information. The control information may include operation information (e.g., information on a signal for controlling to turn the power of the robot 10 off or information on a signal for controlling to operate the user device 30 in a flash mode) for the robot 10 or the at least one user device 30, which will be described in detail through FIG. 4B.

68. According to one or more embodiments, when the sound notification information and exercise intensity information are obtained, the processor 120 may transmit a control signal corresponding to the sound notification (e.g., "an obstacle has been detected in the front. Be careful") to a smartphone that is the user device 30 through the communication interface 110.

69. Alternatively, according to one or more embodiments, when the electronic apparatus 100 is implemented as the server 20, the processor 120 may transmit a control signal for making the exercise intensity of the robot 10 less than a predetermined value based on the obtained exercise intensity information to the robot 10 through the communication interface 110. Here, the predetermined value may be a value stored in a memory at the time of initial setting, but is not limited thereto. The predetermined value may be changed later according to user settings. According to one or more embodiments, when the electronic apparatus 100 is implemented as the robot 10, the processor 120 may control a driving unit so that the exercise intensity becomes less than a predetermined value based on the obtained exercise intensity information.

70. Accordingly, the electronic apparatus may identify that a surrounding environment of a user wearing a robot is in a dangerous situation using sensing data received from at least one user device worn by the user, thereby securing the user's safety.

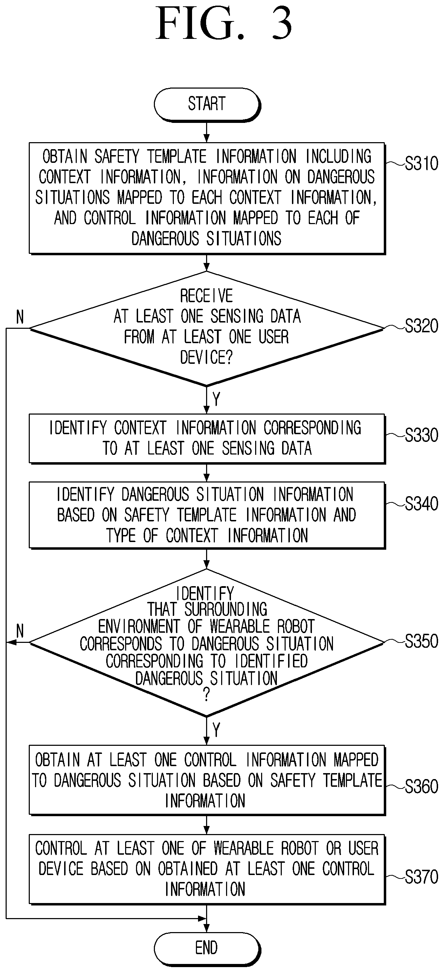

71. FIG. 3 is a flowchart illustrating a controlling method of an electronic apparatus according to one or more embodiments.

72. According to one or more embodiments, the controlling method may include obtaining safety template information including context information, information on dangerous situations mapped to each context information and control information mapped to each dangerous situation (S310).

73. Subsequently, according to one or more embodiments, the controlling method may include identifying whether at least one sensing data is received from at least one user device (S320). According to one or more embodiments, the controlling method may include, when image information obtained through a camera included in the user's smartphone is received through the communication interface 110, identifying that sensing data is received from the user device through this. According to one or more embodiments, the controlling method may include receiving the user's heartbeat information obtained through a heartbeat sensor included in the user's smart watch.

74. Subsequently, according to one or more embodiments, the controlling method may include, when at least one sensing data is received from at least one user device (Y), identifying context information corresponding to the at least one sensing data (S330). According to one or more embodiments, when a user's heartbeat information is received from a smart watch worn by the user, the controlling method may include identifying a heartbeat sensor that is a sensor type of the received heartbeat information, and identify hyper-exercise recognition information that is context information corresponding to the identified sensor type based on information stored in the memory.

75. Then, according to one or more embodiments, the controlling method may include identifying dangerous situation information based on safety template information and the type of the context information (S340). According to one or more embodiments, the controlling method may include, when hyper-exercise recognition information is identified as context information corresponding to the identified heartbeat sensor, identifying use restriction situation information that is dangerous situation information mapped to the hyper-exercise recognition information based on the obtained safety template information.

76. According to one or more embodiments, the controlling method may identify whether an surrounding environment of a wearable robot corresponds to a dangerous situation corresponding to identified dangerous situation information (S350). According to one or more embodiments, the controlling method may identify whether it corresponds to the use restriction situation of the robot 10 based on the received user's heartbeat information. For example, the controlling method may identify whether the robot 10 is in the use restriction situation by inputting the received user's heartbeat information and the use restriction situation information that is the identified dangerous situation information to a trained artificial intelligence model. Alternatively, for example, the controlling method may include, when it is identified that the received user's heartbeat is equal to or greater than a threshold value, identifying that the robot 10 is in a use restriction situation.

77. According to one or more embodiments, the controlling method may include, when it is identified that a surrounding environment of a wearable robot is in a dangerous situation corresponding to the identified dangerous situation information (Y), obtaining at least one control information mapped to the dangerous situation based on the safety template information (S360). According to one or more embodiments, the controlling method may include, when it is identified that the robot 10 is in a use restriction situation as the user's heartbeat is equal to or greater than a threshold value, obtaining exercise intensity information (or exercise intensity control information) mapped to the use restriction situation information.

78. According to one or more embodiments, the controlling method may include controlling at least one of the wearable robot or the user device based on the obtained at least one control information (S370). According to one or more embodiments, when the electronic apparatus 100 is implemented as the robot 10, the controlling method may include controlling a driving unit so that the exercise intensity of the robot 10 becomes less than a predetermined value based on the exercise intensity information mapped to the use restriction situation information.

79. FIGS. 4A and 4B are views illustrating sensing data and safety template information according to one or more embodiments.

80. The processor 120 according to one or more embodiments may control the robot 10 or the at least one user device 30 based on obtained sensing data and safety template information.

81. According to one or more embodiments, referring to FIG. 4A, the processor 120 may identify at least one context information 410 corresponding to sensing data obtained from at least one user device 31 to 33. According to one or more embodiments, a plurality of different types of context information may include at least one of surrounding object recognition information 411, surrounding terrain recognition information 412, altitude recognition information 413, temperature/humidity recognition information 414, time zone recognition information 415, or hyper-exercise recognition information 416, but is not limited thereto. The plurality of different types of context information may further include different types of context information.

82. According to one or more embodiments, the context information 410 corresponding to sensing data may be identified based on the type of at least one sensor 400 used to obtain sensing data. Here, a memory may store information on the type of the sensor 400 (or type information of the sensing data, 401 to 409) and the context information 410 mapped to each type information (401 to 409). According to one or more embodiments, the information on the type of the sensor 400 (or sensor type information or type information of sensing data) may include camera type information 401, barometer sensor type information 402, illuminance sensor type information 403, temperature/humidity sensor type information 404, acceleration sensor type information 405, heartbeat sensor type information 406, proximity sensor type information 407, microphone type information 408, and speaker type information 409, but is not limited thereto. The information on the type of the sensor 400 may include different types of sensor type information.

83. According to one or more embodiments, the processor 120 may identify sensor type information of the received sensing data, and identify context information corresponding to the identified sensor type information based on information stored in a memory. For example, when image information is obtained through a camera included in a smartphone 31, the processor 120 may identify the sensor type information 401, and identify at least one of the surrounding object recognition information 411, surrounding terrain recognition information 412, or altitude recognition information 413 as the corresponding context information.

84. Alternatively, for example, when illuminance information is obtained through an illuminance sensor included in a smart watch 32, the processor 120 may identify the type information 403 of the illuminance sensor, and identify the time zone recognition information 415 as the corresponding context information. Subsequently, when the context information is identified, the processor 120 may identify dangerous situation information based on the type of the context information.

85. According to one or more embodiments, referring to FIG. 4B, the processor 120 may identify the dangerous situation information 420 corresponding to the identified context information 410 based on safety template information 440. According to one or more embodiments, the safety template information 440 may include different types of context information 410, dangerous situation information 420 and control information 430. According to one or more embodiments, the dangerous situation information 420 may include at least one of collision avoidance situation information 421, unusable situation information 422, use caution situation information 423, use restriction situation information 424, or malfunction situation information 425, but is not limited thereto. The dangerous situation information 420 may further include different types of situation information.

86. According to one or more embodiments, the processor 120 may identify dangerous situation information based on safety template information and the type of context information. For example, according to an embodiment, there may be a case in which the type information 403 of an illuminance sensor is identified, and the time zone recognition information 415 is identified as the corresponding context information. In this case, when the time zone recognition information 415 is identified as the context information, the processor 120 may identify the use caution situation information 423 as the corresponding dangerous situation information based on the type of the time zone recognition information 415.

87. Subsequently, according to one or more embodiments, when it is identified that a surrounding environment of the wearable robot 10 is in the identified dangerous situation based on at least one sensing data, the processor 120 may obtain at least one control information 430 mapped to the dangerous situation based on the safety template information 440. According to one or more embodiments, the control information 430 may include at least one of sound notification information 431, exercise intensity information 432 of the wearable robot 10, power control information 433, ambient sound listening control information 434, or flash control information 435, but is not limited thereto. The control information 430 may further include different types of control information.

88. According to one or more embodiments, when it is identified that the illuminance of a surrounding environment is equal to or less than a predetermined value based on the received illuminance information, the processor 120 may identify that the surrounding environment is in a use caution situation 423. Subsequently, the processor 120 may obtain at least one of ambient sound listening information 434 or flash control information 435 as control information mapped to the use caution situation 423 using the safety template information 440.

89. According to one or more embodiments, when the acquired ambient sound listening information 434 and the flash control information 435 are obtained, the processor 120 may transmit a corresponding control signal to the user device 30 through the communication interface 110. Alternatively, the processor 120 may control a driving unit based on the above-described control information.

90. According to one or more embodiments, when the electronic apparatus 100 is implemented as the server 20, the processor 120 may transmit a signal for controlling the user's Bluetooth earphone 33 to perform an ambient sound listening function based on the obtained ambient sound listening information to the Bluetooth earphone 33 through the communication interface 110. Alternatively, the processor 120 may transmit a signal for controlling the user's smartphone 31 to perform a flash-on function to the smartphone 31 through the communication interface 110.

91. Referring back to FIG. 2, when a plurality of sensing data is received from at least one user device 30, the processor 120 according to one or more embodiments may obtain control information corresponding to each of the plurality of sensing data.

92. When first and second text information is identified based on the plurality of sensing data received from the at least one user device 30 according to one or more embodiments, the processor 120 may identify first and second dangerous situation information corresponding to each type of the first and second context information. For example, according to an embodiment, there may be a case in which image information is received through a camera sensor included in the smartphone 31, and the user's heartbeat information is received through a heartbeat sensor included in the smart watch 32. The processor 120 may identify surrounding object recognition information 411 corresponding to the received image information based on the safety template information 440, and identify hyper-exercise recognition information 416 corresponding to the received heartbeat information. Subsequently, the processor 120 may identify collision avoidance situation information 421 and use restriction situation information 424 as dangerous situation information corresponding to each identified context information.

93. Subsequently, according to one or more embodiments, the processor 120 may identify whether an surrounding environment of the wearable robot 10 corresponds to a first dangerous situation based on at least one sensing data corresponding to first context information. For example, when it is identified that an obstacle exists in front of the wearable robot 10 based on image information corresponding to the surrounding object recognition information 411, it can be identified that a surrounding environment of the wearable robot 10 corresponds to a collision avoidance situation.

94. According to one or more embodiments, the processor 120 may identify whether a surrounding environment of the wearable robot 10 corresponds to a second dangerous situation based on at least one sensing data corresponding to second context information. For example, when it is identified that the heartbeat of the user wearing the robot 10 is equal to or greater than a threshold value based on the user's heartbeat information corresponding to the hyper-exercise recognition information 416, the processor 120 may identify that a surrounding environment of the wearable robot 10 corresponds to a use restriction situation.

95. According to one or more embodiments, when the first dangerous situation and the second dangerous situation are identified, the processor 120 may obtain at least one first control information mapped to the first dangerous situation and at least one second control information mapped to the second dangerous situation based on a safety template. For example, as a collision avoidance situation is identified, the processor 120 may obtain the sound notification information 431 and the exercise intensity information 432 as control information corresponding to the collision avoidance situation information 421. In addition, as a use restriction situation is identified, the processor 120 may obtain the exercise intensity information 432 as control information corresponding to the use restriction situation information 424.

96. According to one or more embodiments, when the same type of context information is identified based on a plurality of sensing data, the processor 120 may identify whether the robot 10 is in a dangerous situation based on each of the plurality of sensing data.

97. According to one or more embodiments, the electronic apparatus 100 may be implemented as the wearable robot 10. According to one or more embodiments, when the same type of context information is identified based on a plurality of sensing data received from at least one user device 30, the processor may identify dangerous situation information based on the identified type of context information. For example, when sensing information (or sensing data) obtained through a camera 401 and sensing information (or sensing data) obtained through a microphone 408 are received, the processor 120 may identify that a plurality of sensing data that is received previously is the surrounding object recognition information 411 that is the same type of context information 410. Subsequently, the processor 120 may identify the collision avoidance situation information 421 that is dangerous situation information corresponding to the surrounding object recognition information 411.

98. Subsequently, according to one or more embodiments, when it is identified that a surrounding environment of the wearable robot 10 corresponds to a dangerous situation corresponding to dangerous situation information based on a plurality of sensing data, the processor 120 may obtain a control signal mapped to the identified dangerous situation based on a safety template. In this case, according to one or more embodiments, the processor 120 may identify whether it corresponds to a dangerous situation based on each of the plurality of sensing data.

99. For example, the processor 120 may identify whether a surrounding environment of the robot 10 corresponds to a collision avoidance situation based on each of the sensing information (or sensing data) obtained through the camera 401 and the sensing data obtained through the microphone 408, and when it is identified that at least one sensing data from among the received plurality of sensing data corresponds to a collision avoidance situation of the robot 10, may obtain at least one of the sound notification information 431 or the exercise intensity information 432 that is control information mapped to the identified collision avoidance situation based on the safety template 440. According to one or more embodiments, even when it is identified that a surrounding environment of the robot 10 does not correspond to a collision avoidance situation based on sensing data obtained through the camera 401, if it is identified that the surrounding environment corresponds to a collision avoidance situation based on sensing information obtained through the microphone 408, the processor 120 may obtain control information based on the safety template 440.

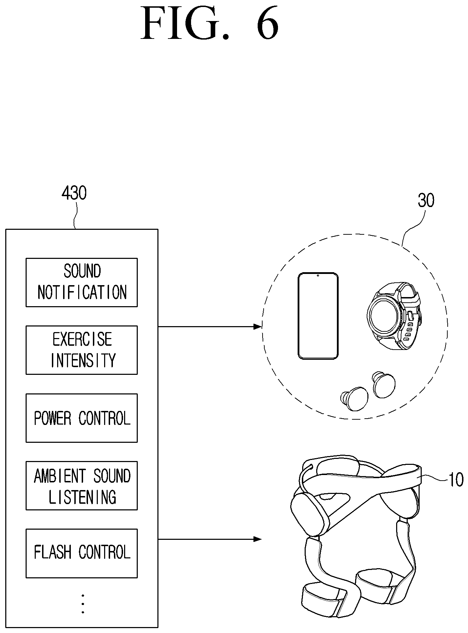

100. Subsequently, according to one or more embodiments, the processor 120 may control a driving unit based on the obtained control information. For example, the processor 120 may control the driving unit to transmit a corresponding control signal to the user device 30 through the communication interface 110 based on at least one of the sound notification information 431 or the exercise intensity information 432 that is the obtained control information. In this case, whether to transmit the corresponding control signal to the user device 30 or control the driving unit can be identified based on the type of control information. Alternatively, it can be identified based on the number of types of the received sensing data according to one or more embodiments, which will be described in detail with reference to FIG. 6.

101. According to one or more embodiments, when a dangerous situation is identified based on the first sensing data and a dangerous situation is identified based on the second sensing data, the processor 120 may obtain a control signal mapped to the dangerous situation based on a safety template. Here, the plurality of sensing data may include the first and second sensing data.

102. According to one or more embodiments, the processor 120 may identify whether a surrounding environment of the robot 10 corresponds to a collision avoidance situation based on each of the sensing information (or sensing data) obtained through the camera 401 and the sensing data obtained through the microphone 408. For example, when it is identified that it corresponds to a collision avoidance situation based on the sensing data obtained through the camera 401 and it corresponds to a collision avoidance situation based on the sensing data obtained through the microphone 408, the processor 120 may obtain control information corresponding to the collision avoidance situation based on the safety template 440.

103. However, the present disclosure is not limited thereto, and according to one or more embodiments, even if a dangerous situation is not identified based on the first sensing data, when a dangerous situation is identified based on the second sensing data, a control signal mapped to the dangerous situation can be obtained based on a safety template.

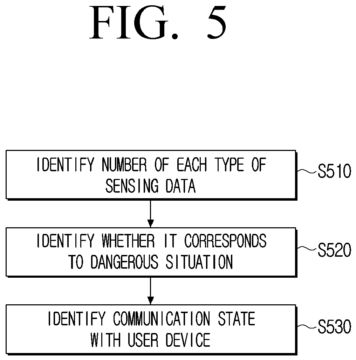

104. FIG. 5 is a view illustrating a controlling method of an electronic apparatus when a plurality of sensing data is received according to one or more embodiments.

105. Referring to FIG. 5, according to one or more embodiments, the controlling method may include identifying the number of received sensing data for each type (S510). According to one or more embodiments, when a plurality of sensing data is received, the processor 120 may identify the type of the received plurality of sensing data (401 to 409).

106. For example, when each of the sensing data obtained through the microphone 408 included in the smart watch 32 and the sensing data obtained through the microphone 408 included in the smartphone 31 is received, the processor 120 may identify that the sensing data obtained through the microphone 408 is two.

107. Subsequently, according to one or more embodiments, the controlling method may include identifying whether the robot 10 is in a dangerous situation based on the received sensing data (S520). According to one or more embodiments, when it is identified that a surrounding environment of the robot 10 corresponds to a collision avoidance situation based on the sensing data obtained through the microphone 408 included in the smartphone 31 and a surrounding environment of the robot 10 corresponds to a collision avoidance situation based on the sensing data obtained through the microphone 408 included in the smart watch 32, the processor 120 may obtain control information corresponding to the collision avoidance situation based on the safety template 440. In this case, it is possible to identify that the surrounding environment of the robot 10 corresponds to a collision avoidance situation using a trained artificial intelligence model.

108. According to other embodiments, when it is identified that a surrounding environment of the robot 10 corresponds to a collision avoidance situation based on the sensing data obtained through the microphone 408 included in the smartphone 31 but the surrounding environment of the robot 10 does not correspond to a collision avoidance situation based on the sensing data obtained through the microphone 408 included in the smart watch 32, the processor 120 may not obtain control information.

109. In other words, when each of a plurality of sensing data corresponds to the same type of dangerous situation information, the processor 120 may obtain control information (or a control signal) only when it is identified that each of the plurality of sensing data corresponds to a dangerous situation and control a driving unit based on the obtained control information. Accordingly, the accuracy of determining whether the robot 100 is in a dangerous situation is improved, and the user's confidence in the robot 100 that performs a safety function is improved.

110. Subsequently, according to one or more embodiments, the controlling method may include identifying a communication state with the user device 30 (S530). According to one or more embodiments, when it is identified that a surrounding environment of the robot 10 corresponds to a collision avoidance situation, the processor 120 may obtain at least one of the sound notification information 431 or the exercise intensity information 432.

111. In this case, when the electronic apparatus 100 is implemented as the server 20 according to one or more embodiments, the processor 120 may transmit a control signal corresponding to the exercise intensity information 432 to the robot 10 through the communication interface 110. According to one or more embodiments, the controlling method may include identifying a communication state between the robot 10 and the user device 30, and transmitting a control signal to the robot 10 through the communication interface 110 only when it is identified that hand shaking is performed smoothly. Alternatively, according to one or more embodiments, when the electronic apparatus 100 is implemented as the robot 10, the processor 120 may identify a communication state between the robot 10 and the user device 30, and control a driving unit only when it is identified that hand shaking is performed smoothly.

112. Referring back to FIG. 2, according to one or more embodiments, the processor 120 may transmit different types of control signals to the robot 10 or at least one user device 30 based on the number of types of the obtained sensing data, which will be described in detail with reference to FIG. 6.

113. FIG. 6 is a view illustrating a method of transmitting different types of control signals according to one or more embodiments.

114. Referring to FIG. 6, according to one or more embodiments, the processor 120 may identify the type of control signal based on the type of control information. Here, the type of control signal may be one of notification information or a control signal of a driving unit of the robot 10.

115. According to one or more embodiments, when the identified control information is the sound notification information 431, the ambient sound listening information 434 or the flash control information 435, the processor 120 may identify that the type of the control signal is notification information, and transmit a control signal corresponding to the identified control information to at least one user device 30 through the communication interface 110 based on the type of the identified control signal.

116. According to one or more embodiments, when the identified control information is the exercise intensity information 432 or the power control information 433, the processor 120 may identify that it is a control signal of a driving unit of the robot 10. Subsequently, as it is identified that the identified control information is a driving unit control signal, the processor 120 may transmit the identified control signal to the robot 10 through the communication interface 110. Alternatively, the processor 120 may control the driving unit based on the identified control signal.

117. According to one or more embodiments, the processor 120 may identify the type of control signal based on the number of each type of sensing data. According to one or more embodiments, when the number of each type of sensing data is less than a threshold number (e.g., two), the processor 120 may obtain control information mapped to an identified dangerous situation based on the safety template 440. In this case, the type of control information may be notification information.

118. For example, when each of the sensing data obtained through the microphone 408 included in the smart watch 32 and the sensing data obtained through the microphone409 included in the smart phone 31 is received, the processor 120 may identify that there are two sensing data obtained through the microphone 408. Subsequently, when it is determined that a surrounding environment of the robot 10 corresponds to a collision avoidance situation based on the plurality of received sensing data, the processor 120 may obtain the exercise intensity information 432 based on the safety template 440. In this case, as the number of each type of received sensing data is equal to or greater than two, the processor 120 may obtain exercise intensity information mapped to the identified collision avoidance situation based on the safety template 440. In this case, the exercise intensity information may be control signal of a driving unit.

119. Alternatively, for example, when only the sensing data obtained through the microphone 408 included in the smart phone 31 is received, the processor 120 may identify that there is one sensing data obtained through the microphone 408. Subsequently, when it is determined that a surrounding environment of the robot 10 corresponds to a collision avoidance situation based on the received sensing data, the processor 120 may obtain the exercise intensity information 432 based on the safety template 440. In this case, as it is identified that the number of each type of received sensing data is less than two, the processor 120 may obtain notification information mapped to a collision avoidance situation identified based on the safety template 440. In this case, the notification information is a signal for providing notification information to the user to control the exercise intensity, for example, a signal for providing notification such as "An obstacle has been detected ahead. Please lower the exercise intensity." The processor 120 may transmit the obtained notification information to at least one user device 30 through the communication interface 110.

120. As the electronic apparatus 100 directly controls the driving unit only when the number of each type of sensing data is equal to or greater than a threshold number and transmits notification information when the number of each type of sensing data is less than a threshold number, sensing accuracy and user satisfaction can be improved.

121. According to one or more embodiments, the processor 120 may identify the type of control signal based on the number of sensing data corresponding to the context information 410 of a specific type. According to one or more embodiments, when the number of sensing data corresponding to a specific type of context information received from at least one user device is less than a threshold number, the processor 120 may obtain notification information mapped to a dangerous situation based on the safety template 440.

122. For example, sensing information (or sensing data) obtained through the camera 401 and sensing information obtained through the microphone 408 may be received. As it is identified that the number of sensing data corresponding to the collision avoidance situation information 421 that is context information corresponding thereto is equal to or greater than two, the processor 120 may obtain exercise intensity information mapped to the collision avoidance situation based on the safety template 440. In this case, the processor 120 may control the driving unit based on the exercise intensity information. Alternatively, when the electronic apparatus 100 is implemented as the server 20, the processor 120 may transmit a control signal of the driving unit corresponding to the exercise intensity information to the robot 10 through the communication interface 110.

123. Alternatively, for example, only sensing information obtained through the microphone 408 may be received. As it is identified that the number of sensing data corresponding to the collision avoidance situation information 421 that is context information corresponding thereto is less than two, the processor 120 may obtain exercise intensity information mapped to the collision avoidance situation based on the safety template 440. In this case, the obtained exercise intensity information may be a notification information type. The processor 120 may transmit the obtained notification information to at least one user device 30 through the communication interface 110.

124. FIGS. 7A and 7B are views illustrating a method of identifying a dangerous situation using a trained artificial intelligence model according to one or more embodiments.

125. The electronic apparatus 100 according to one or more embodiments may include a plurality of artificial intelligence models (or artificial neural network models or learning network models) consisting of at least one neural network layer. The artificial neural network may include Deep Neural Network (DNN), for example, Convolutional Neural Network (CNN), Recurrent Neural Network (RNN), Restricted Boltzmann Machine (RBM), Deep Belief Network (DBN), Bidirectional Recurrent Deep Neural Network (BRDNN) or Deep Q-Networks, but is not limited thereto.

126. According to one or more embodiments, a memory may store information regarding a plurality of neural network (or artificial intelligence) models. Here, storing information regarding neural network models may mean storing various information related to the operation of the neural network models, for example, information regarding at least one layer included in the neural network models, information regarding parameters, bias, etc. used for each of at least one layer. However, information regarding the neural network models may be stored in an internal memory of the processor 120 according to the implementation form of the processor 120. For example, when the processor 120 is implemented as dedicated hardware, information regarding the neural network models may be stored in an internal memory of the processor 120.

127. Referring to FIGS. 7A and 7B, according to one or more embodiments, the processor 120 may identify whether a surrounding environment of the robot 10 corresponds to a dangerous situation using an artificial intelligence model (or a neural network model).

128. According to one or more embodiments, referring to FIG. 7A, when dangerous situation information 712 is identified, the processor 120 may identify whether a surrounding environment of a wearable robot corresponds to a dangerous situation by inputting at least one sensing data 711 and the dangerous situation information 712 to a trained artificial intelligence model 710. For example, when the collision avoidance situation information 421 is identified as the sensing data 711 obtained through the camera 410 is received, dangerous situation identification information 713 may be obtained by inputting the received sensing data 711 and the dangerous situation information 712 to the trained artificial intelligence model 710. In this case, the dangerous situation identification information may be information for determining whether a surrounding environment of the robot 10 corresponds to a collision avoidance situation. Subsequently, the processor 120 may obtain the control information 430 based on the obtained dangerous situation identification information and the safety template 440, and control at least one of the robot 10 or the user device 30 based on the obtained control information.

129. According to one or more embodiments, referring to FIG. 7B, the electronic apparatus 100 may include a plurality of neural network models corresponding to each type of sensing data. When first sensing data 721 is received according to one or more embodiments, the processor 120 may identify a neural network model 720 corresponding to the first sensing data 721, and obtain first dangerous situation identification information 722 corresponding to the first sensing data by inputting the first sensing data 721 to the identified neural network model 720. Alternatively, when second sensing data 731 is received according to one or more embodiments, the processor 120 may identify a neural network model 730 corresponding to the second sensing data 731, and obtain second dangerous situation identification information 732 corresponding to the second sensing data by inputting the second sensing data 731 to the identified neural network model 730.

130. According to one or more embodiments, the trained neural network model may be trained based on sensing data, dangerous situation information and dangerous situation identification information (or information for determining whether it corresponds to a dangerous situation) corresponding to the sensing data. Alternatively, according to one or more embodiments, the trained neural network model may be trained based on sensing data and dangerous situation identification information corresponding thereto. In this case, the electronic apparatus 100 may include at least one neural network model in the number corresponding to the number of types of sensing data.

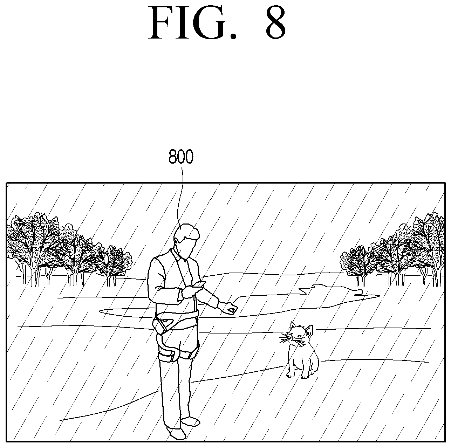

131. FIG. 8 is a view illustrating a controlling method of an electronic apparatus according to one or more embodiments.

132. According to one or more embodiments, a user 800 wearing the robot 10 may exercise in a park where cats often appear on a cloudy weekend evening.

133. According to one or more embodiments, referring to FIG. 8, the processor 120 may first receive first sensing data obtained through the camera 401 included in the smartphone 31 that the user is currently using through the communication interface 110, second sensing data obtained through the illuminance sensor 403 and third sensing data obtained through the speaker 409. In addition, the processor 120 may receive fourth sensing data obtained through the microphone 408 included in a Bluetooth earphone 33 that the user is currently using through the communication interface 110.

134. According to one or more embodiments, the processor 120 may identify context information corresponding to each of a plurality of received sensing data. In this case, the processor 120 may identify the surrounding object recognition information 411 corresponding to the first sensing data, the time zone recognition information 415 corresponding to the second sensing data and the surrounding object recognition information 411 corresponding to the fourth sensing data.

135. Subsequently, according to one or more embodiments, the processor 120 may identify the collision avoidance situation information 421 and the use caution situation information 423 as dangerous situation information corresponding to the type of the identified context information.

136. Subsequently, according to one or more embodiments, the processor 120 may identify whether the user is in a dangerous situation based on the received at least one sensing data and the identified dangerous situation information. In this case, it is possible to identify whether the user is in a dangerous situation by inputting the sensing data and the dangerous situation information to a trained artificial intelligence model.

137. According to one or more embodiments, when it is identified that a surrounding environment is continuously in a very dark situation as the illuminance value is less than a threshold value, the processor 120 may obtain ambient sound listening information and flash control information corresponding to use caution situation information. According to one or more embodiments, when it is identified that a stray cat exists around the robot 10 as sensing data corresponding to the cry of a stray cat or sensing data corresponding to the silhouette of a stray cat is received, the processor 120 may obtain the sound notification information 431 and the exercise intensity control information 432 mapped to a collision avoidance situation.

138. Subsequently, according to one or more embodiments, the processor 120 may control the robot 10 or the user device 30 based on the obtained control information. According to one or more embodiments, the processor 120 may transmit a control signal for turning on an ambient sound listening function to the Bluetooth earphone 33 through the communication interface 110. According to one or more embodiments, the processor 120 may transmit a control signal for turning on a flash to the smartphone 31 through the communication interface 110. According to one or more embodiments, when the electronic apparatus 100 is implemented as the server 20, the processor 120 may transmit a control signal for reducing the exercise intensity to less than a predetermined value to the robot 10 through the communication interface 110. Alternatively, when the electronic apparatus is implemented as the robot 10, the processor 120 may control a driving unit to reduce the exercise intensity to less than a predetermined value.

139. According to the above-described embodiments, the user can walk or exercise safely based on at least one user device being used by the user as well as the wearable robot. The electronic apparatus may perform a safety function using the sensing data obtained from the user device and thus, the user's safety can be secured.

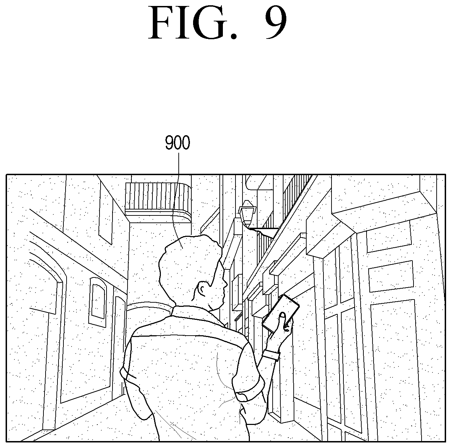

140. FIG. 9 is a view illustrating a controlling method of an electronic apparatus according to one or more embodiments.

141. According to one or more embodiments, a user 900 may wear the robot 10 late at night and may be walking in the city while using the smartphone 31 and the smart watch 32.

142. Referring to FIG. 9, according to one or more embodiments, the processor 120 may first receive first sensing data obtained through the camera 401 included in the smartphone 31 that is currently being used by the user, second sensing data obtained through the luminance sensor 403, third sensing data obtained through the speaker 409 and fourth sensing data obtained through the proximity sensor 407 through the communication interface 110. In addition, the processor 120 may receive fifth sensing data obtained through the heart beat sensor 406 included in the smart watch 32 that is currently being used by the user and sixth sensing data obtained through the speaker 409.

143. According to one or more embodiments, the processor 120 may identify context information corresponding to each of a plurality of received sensing data. In this case, the processor 120 may identify the surrounding object recognition information 411 corresponding to the first sensing data, the time zone recognition information 415 corresponding to the second sensing data and the hyper-exercise recognition information 416 corresponding to the fifth sensing data.

144. Subsequently, according to one or more embodiments, the processor 120 may obtain the collision avoidance situation information 421, the use caution situation information 423 and the use restriction situation information 424.

145. Subsequently, according to one or more embodiments, the processor 120 may identify whether the user is in a dangerous situation based on the received at least one sensing data and the identified dangerous situation information. In this case, whether the user is in a dangerous situation can be identified by inputting the sensing data and the dangerous situation information to a trained artificial intelligence model.

146. According to one or more embodiments, when it is identified that a street light exists in front of the user, the processor 120 may identify that the user is in a collision avoidance situation. According to one or more embodiments, when the user is crossing a crosswalk while walking in a resistance mode, the processor 120 may identify that it corresponds to a use restriction situation or a collision avoidance situation. Here, the resistance mode means a function used for exercise by giving resistance to walking.

147. Subsequently, according to one or more embodiments, the processor 120 may control the robot 10 or the user device 30 based on the obtained control information. According to one or more embodiments, the processor 120 may transmit a control signal informing that an obstacle exists in the front to the smartphone 31 or the smart watch 32 through the communication interface 110. Alternatively, according to one or more embodiments, the processor 120 may transmit a notification signal corresponding to ""Be careful because the signal may change before walking on the crosswalk is finished" to the smart watch 32 through the communication interface 110. According to one or more embodiments, when the electronic apparatus 100 is implemented as the server 20, the processor 120 may transmit a control signal for reducing the exercise intensity to less than a predetermined value to the robot 10 through the communication interface 110. Alternatively, when the electronic apparatus is implemented as the robot 10, the processor 120 may control a driving unit to reduce the exercise intensity to less than a predetermined value.

148. According to one or more embodiments, the processor 120 may control the robot 10 or at least one user device 30 based on user data. According to one or more embodiments, a memory may pre-store the user's exercise duration, the user's setting value, the assistance/resistance torque pattern information during the previous user's exercise, and the processor 120 may obtain control information using the above-described information. For example, when there is information on the exercise intensity set by the user, the processor 120 may control the robot 10 based on the information on the exercise intensity set by the user. Alternatively, according to one or more embodiments, the processor 120 may identify a dangerous situation based on the sensing data and the user data.

149. According to one or more embodiments, the control information included in the safety template information 440 may vary based on the user setting. For example, when the user does not exercise for 30 minutes or more after wearing the robot 10, the processor 120 may obtain control information to have the exercise duration of less than 30 minutes in consideration of this.

150. Accordingly, the electronic apparatus 100 may perform a safety function based on the sensing data obtained from the robot and at least one user device.

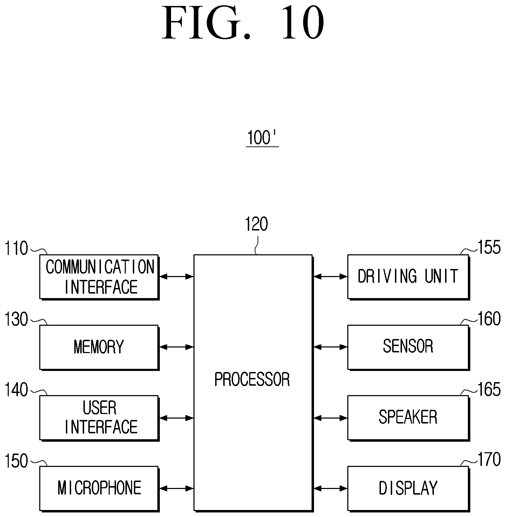

151. FIG. 10 is a block diagram illustrating detailed configuration of an electronic apparatus according to one or more embodiments.

152. According to FIG. 10, an electronic apparatus 100' may include the communication interface 110, the processor 120, a memory 130, a user interface 140, a microphone 150, a driving unit 155, a sensor 160, a speaker 165, and a display 170. Among the components illustrated in FIG. 9, detailed descriptions of components overlapping with those shown in FIG. 2 will be omitted.

153. The memory 130 may store data necessary for various embodiments. The memory 130 may be implemented as a memory embedded in the electronic apparatus 100', or implemented in a memory form capable of being detachable from the electronic apparatus 100', based on a data storage purpose. For example, data for driving the electronic apparatus 100' may be stored in the memory embedded in the electronic apparatus 100', and data for an extension function of the electronic apparatus 100' may be stored in the memory capable of being detached from the electronic apparatus 100'. When implemented as a memory embedded in the electronic apparatus 100', the memory 130 may be implemented as at least one of a volatile memory (e.g., dynamic random access memory (DRAM), static RAM (SRAM), or synchronous dynamic RAM (SDRAM)), or a non-volatile memory (e.g., one time programmable read only memory (OTPROM), programmable ROM (PROM), erasable and programmable ROM (EPROM), electrically erasable and programmable ROM (EEPROM), mask ROM, flash ROM, flash memory (e.g., NAND flash, or NOR flash), hard drive, or solid state drive (SSD)). When implemented as the memory capable of being detached from the electronic apparatus 100', the memory 130 may be implemented in the form of a memory card (e.g., compact flash (CF), secure digital (SD), micro secure digital (Micro-SD), mini secure digital (Mini-SD), extreme digital (xD), or multi-media card (MMC)), or an external memory (e.g., USB memory) which may be connected to a universal serial bus (USB) port.

154. According to one or more embodiments, the memory 142may store information regarding a plurality of neural network (or artificial intelligence) models. Here, storing information regarding a neural network model may mean storing various information related to the operations of a neural network model, for example, information regarding at least one layer included in the neural network model, information regarding a parameter used in each of the at least one layer, information on bias, etc. However, depending on the implementation form of the processor 120, the information on a neural network model may be stored in an internal memory of the processor. For example, when the processor 120 is implemented as a dedicated hardware, the information on a neural network model may be stored in an internal memory of the processor 120.

155. The user interface 140 may be implemented as a device such as a button, a touch pad, a mouse, and a keyboard, or may be implemented as a touch screen, a remote control transmitting/receiving unit, etc. capable of performing the above-described display function and manipulation input function. The remote control transmitting/receiving unit may receive a remote control signal from an external remote control device through at least one of an infrared communication, Bluetooth communication or Wi-Fi communication, or transmit a remote control signal.

156. The microphone 150 may mean a module that acquires sound and converts it into an electrical signal, and may include a condenser microphone, a ribbon microphone, a moving coil microphone, a piezoelectric element microphone, a carbon microphone, and a Micro Electro Mechanical System (MEMS) microphone. In addition, the microphone 150 may be implemented in non-directional, bi-directional, unidirectional, sub-cardioid, super-cardioid, or hyper-cardioid method.

157. The driving unit 155 is a device capable of driving the electronic apparatus 100'. The driving unit 155 may adjust the driving direction and driving speed under the control of the processor 120, and the driving unit 155 according to one or more embodiments may include a power generating device that generates power for driving of the electronic device 100' (e.g., gasoline engine, diesel engine, liquefied petroleum gas (LPG) engine, electric motor, etc.), a steering device for adjusting the driving direction (e.g., manual steering, hydraulics steering, electronic control power steering: EPS, etc.), a driving device that drives the electronic apparatus 100' according to power (e.g., wheel, propeller, etc.), etc. Here, the driving unit 155 may be modified and implemented according to the driving type (e.g., wheel type, walking type, flying type, etc.) of the electronic apparatus 100'.

158. At least one sensor 160 (hereinafter, referred to as a sensor) may include a plurality of various types of sensors. The sensor 160 may measure a physical quantity or detect an operating state of the electronic apparatus 100' and convert the measured or detected information into an electrical signal. The sensor 160 may include a camera, and the camera may include a lens for focusing visible light and other optical signals received after being reflected by an object into an image sensor and an image sensor capable of detecting visible light and other optical signals. Here, the image sensor may include a 2D pixel array divided into a plurality of pixels, and a camera according to one or more embodiments may be implemented as a depth camera. In addition, the sensor 160 may include a distance sensor such as a Light Detection and Ranging (LIDAR) sensor and a Time or flight (TOF) sensor.

159. In addition, at least one sensor 160 may include at least one of a gesture sensor, a gyro sensor, an sensor, a magnetic sensor, an acceleration sensor, a grip sensor, a proximity sensor, a color sensor (e.g., red, green, blue (RGB) sensors), a bio sensor, a temperature/humidity sensor, an illuminance sensor, or an ultra violet (UV) sensor.

160. The speaker 165 may consist of a tweeter for high-pitched sound reproduction, a midrange for mid-range sound reproduction, a woofer for low-pitched sound reproduction, a subwoofer for extremely low-pitched sound reproduction, an enclosure for controlling resonance, a crossover network for dividing an electrical signal frequency input to the speaker by band, etc.

161. The speaker 165 may output a sound signal to the outside of the electronic apparatus 100'. The speaker 165 may output multimedia reproduction, recording reproduction, various notification sounds, voice messages, etc. The electronic apparatus 100' may include an audio output device such as the speaker 165, but may include an output device such as an audio output terminal. In particular, the speaker 165 may provide obtained information, information processed/produced based on the obtained information, a response result regarding a user's voice, or an operation result in the form of voice.

162. The display 170 may be implemented as a display including a self-light emitting device or a display including a non-light emitting device and a backlight. For example, the display 170 may be implemented as various types of displays such as liquid crystal display (LCD), organic light emitting diodes (OLED) display, Light Emitting Diodes (LED), micro LED, Mini LED, Plasma Display Panel (PDP), Quantum dot (QD) display, a quantum dot light-emitting diode (QLED) display, and the like. The display 170 may also include a driving circuit that can be implemented in the form of Amorphous Silicon Thin-Film Transistor (a-si TFT), low temperature poly silicon Thin-Film Transistor (LTPS TFT), Organic Thin-Film Transistor (OTFT), etc., a backlight unit, etc. A display 170 may be implemented as a touch screen combined with a touch sensor, a flexible display, a rollable display, a 3D display, a display in which a plurality of display modules are physically connected, etc. The processor 120 may control the display 170 to output an output image obtained according to the above-described various embodiments. Here, the output image may be a high-resolution image of 4K, 8K or higher.

163. According to the above-described embodiments, a surrounding environment of a wearable robot may be monitored using sensing information obtained from a user device and a safety function may be performed based thereon. Accordingly, the user's safety can be secured.

164. Methods according to the above-described various embodiments of the disclosure may be implemented in the form of an application which may be installed in an existing electronic apparatus. Alternatively, the methods according to the above-described various embodiments may be performed using a neural network trained based on deep learning (or deep learned neural network), that is, a learning network model. Alternatively, the methods according to the above-described various embodiments may be implemented only by software upgrade or hardware upgrade of the existing electronic apparatus. Alternatively, the above-described various embodiments may be performed through an embedded server included in the electronic apparatus, or an external server of the electronic apparatus.

165. According to another embodiment of the disclosure, the various examples described above may be implemented in software including an instruction stored in a machine-readable storage medium (for example, a computer-readable storage medium). A machine may be a device that invokes the stored instruction from the storage medium and be operated based on the invoked instruction, and may include the electronic apparatus in the disclosed embodiments. In case that the instruction is executed by the processor, the processor may directly perform a function corresponding to the instruction or other components may perform the function corresponding to the instruction under a control of the processor. The instruction may include codes provided or executed by a compiler or an interpreter. The machine-readable storage medium may be provided in the form of a non-transitory storage medium. Here, the term "non-transitory" indicates that the storage medium is tangible without including a signal, and does not distinguish whether data are semi-permanently or temporarily stored in the storage medium.

166. In addition, according to another embodiment of the disclosure, the method in the various examples described above may be provided by being included in a computer program product. The computer program product may be traded as a product between a seller and a purchaser. The computer program product may be distributed in a form of the storage medium (for example, a compact disc read only memory (CD-ROM)) that may be read by the machine or online through an application store (for example, PlayStoreTM). In case of the online distribution, at least portions of the computer program product may be at least temporarily stored or temporarily provided in a storage medium such as a memory of a server of a manufacturer, a server of an application store or a relay server.

167. Each component (e.g., module or program) in the various examples described above may include one entity or a plurality of entities, and some of the corresponding sub-components described above may be omitted or other sub-components may be further included in the various examples. Alternatively or additionally, some of the components (e.g., modules or programs) may be integrated into one entity, and may perform functions performed by the respective corresponding components before being integrated in the same or similar manner. Operations performed by the modules, the programs, or other components in the various examples may be executed in a sequential manner, a parallel manner, an iterative manner, or a heuristic manner, at least some of the operations may be performed in a different order or be omitted, or other operations may be added.

168. While embodiments of the disclosure have been illustrated and described herein, the disclosure is not limited thereto and various modifications may be made by those of ordinary skill in the art without departing from the gist of the disclosure. These modifications should not be understood to be separate from the scope and spirit of the disclosure.

## Claims

1. An electronic apparatus comprising:
a communication interface; and
at least one processor configured to:
obtain safety template information comprising a plurality of types of context information, information about dangerous situations mapped to a type of the plurality of types of context information, and control information mapped to each dangerous situation among the dangerous situations;
based on at least one sensing data being received from at least one user device through the communication interface, identify the type of the context information corresponding to the at least one sensing data;
identify the information about the dangerous situations based on the safety template information and the type of the context information;
identify whether a surrounding environment of a wearable robot corresponds to a dangerous situation based on the at least one sensing data;
based on identifying that the surrounding environment of the wearable robot corresponds to the dangerous situation, obtain the control information mapped to each dangerous situation based on the safety template information; and
control at least one of the wearable robot or the at least one user device based on the obtained control information.

2. The electronic apparatus as claimed in claim 1, wherein the at least one processor is further configured to:
based on identifying first context information and second context information based on the at least one sensing data received from the at least one user device, identify first dangerous situation information and second dangerous situation information corresponding to the type of the first context information and the type of the second context information;
identify whether the surrounding environment of the wearable robot corresponds to a first dangerous situation based on the at least one sensing data corresponding to the first context information;
identify whether the surrounding environment of the wearable robot corresponds to a second dangerous situation based on the at least one sensing data corresponding to the second context information;
based on identifying the first dangerous situation and the second dangerous situation, obtain first control information mapped to the first dangerous situation and second control information mapped to the second dangerous situation based on the safety template information.

3. The electronic apparatus as claimed in claim 1, wherein the electronic apparatus further comprises the wearable robot,
wherein the wearable robot further comprises a driver, and
wherein the at least one processor is further configured to:
based on identifying that a same type of context information is obtained based on at least two sensing data received from the at least one user device, identify dangerous situation information based on the identified same type of context information;
based on identifying that the surrounding environment of the wearable robot corresponds to the dangerous situation corresponding to the dangerous situation information based on the at least two sensing data, obtain a control signal mapped to the dangerous situation based on the safety template information; and
control the driver based on the control signal.

4. The electronic apparatus as claimed in claim 3, wherein the at least two sensing data comprises first sensing data and second sensing data, and
wherein the at least one processor is further configured to, based on identifying the dangerous situation based on the first sensing data and identifying the dangerous situation based on the second sensing data, obtain the control signal mapped to the dangerous situation based on the safety template information.

5. The electronic apparatus as claimed in claim 1, wherein the at least one processor is further configured to:
based on the at least one sensing data corresponding to the type of context information received from the at least one user device being less than a predetermined number, obtain notification information mapped to the dangerous situation based on the safety template information; and transmit the obtained notification information to the at least one user device through the communication interface.

6. The electronic apparatus as claimed in claim 1, wherein the at least one processor is further configured to:
based on identifying dangerous situation information, identify whether the surrounding environment of the wearable robot corresponds to the dangerous situation by providing the at least one sensing data and the dangerous situation information to a trained artificial intelligence model.

7. The electronic apparatus as claimed in claim 1, wherein the plurality of types of context information comprises at least one of surrounding object recognition information, surrounding terrain recognition information, altitude recognition information, temperature/humidity recognition information, time zone recognition information, or hyper-exercise recognition information,
wherein dangerous situation information comprises at least one of collision avoidance situation information, unavailability situation information, use caution situation information, use restriction situation information, or malfunction situation information, and
wherein the control information comprises at least one of sound notification information, exercise intensity information of the wearable robot, power control information, ambient sound listening control information, or flash control information.

8. The electronic apparatus as claimed in claim 1, wherein the electronic apparatus further comprises a server, and
wherein the server is configured to transmit a control signal to at least one of the wearable robot or the at least one user device through the communication interface based on the obtained control information.

9. The electronic apparatus as claimed in claim 8, wherein the at least one processor is further configured to, based on identifying dangerous situation information, identify whether the surrounding environment of the wearable robot corresponds to the dangerous situation by providing the at least one sensing data and the dangerous situation information to a trained artificial intelligence model.

10. The electronic apparatus as claimed in claim 1, wherein the at least one user device comprises at least one of a smartphone, a smart watch or a Bluetooth earphone.

11. A controlling method of an electronic apparatus, the controlling method comprising:
obtaining safety template information comprising a plurality of types of context information, information about dangerous situations mapped to a type of the plurality of types of context information, and control information mapped to each dangerous situation among the dangerous situations;
based on at least one sensing data being received from at least one user device through a communication interface, identifying the type of the context information corresponding to the at least one sensing data;
identifying the information about the dangerous situations based on the safety template information and the type of the context information;
identifying whether a surrounding environment of a wearable robot corresponds to a dangerous situation based on the at least one sensing data;
based on identifying that the surrounding environment of the wearable robot corresponds to the dangerous situation, obtaining the control information mapped to each dangerous situation based on the safety template information; and
controlling at least one of the wearable robot or the at least one user device based on the obtained control information.

12. The controlling method as claimed in claim 11, further comprising, based on identifying first context information and second context information based on the at least one sensing data received from the at least one user device, identifying first dangerous situation information and second dangerous situation information corresponding to the type of the first context information and the type of the second context information, and
wherein the identifying whether the surrounding environment of the wearable robot corresponds to the dangerous situation comprises:
identifying whether the surrounding environment of the wearable robot corresponds to a first dangerous situation based on the at least one sensing data corresponding to the first context information; and
identifying whether the surrounding environment of the wearable robot corresponds to a second dangerous situation based on the at least one sensing data corresponding to the second context information, and
wherein the obtaining control information comprises, based on identifying the first dangerous situation and the second dangerous situation, obtaining first control information mapped to the first dangerous situation and second control information mapped to the second dangerous situation based on the safety template information.

13. The controlling method as claimed in claim 11, wherein the electronic apparatus comprises the wearable robot,
wherein the identifying dangerous situation information comprises, based on identifying that a same type of context information is obtained based on at least two sensing data received from the at least one user device, identify dangerous situation information based on the identified same type of context information, and
wherein the obtaining control information comprises, based on identifying that the surrounding environment of the wearable robot corresponds to the dangerous situation corresponding to the dangerous situation information based on the at least two sensing data, obtaining a control signal mapped to the dangerous situation based on the safety template information, and
wherein the controlling comprises controlling a driver based on the control signal.

14. The controlling method as claimed in claim 13, wherein the at least two sensing data comprises first sensing data and second sensing data, and
wherein the obtaining the control signal further comprises, based on identifying the dangerous situation based on the first sensing data and identifying the dangerous situation based on the second sensing data, obtaining the control signal mapped to the dangerous situation based on the safety template information.

15. The controlling method as claimed in claim 11, wherein the obtaining control information comprises, based on the at least one sensing data corresponding to the type of context information received from the at least one user device being less than a predetermined number, obtaining notification information mapped to the dangerous situation based on the safety template information, and
wherein the controlling comprises transmitting the obtained notification information to the at least one user device.
